# EUROPEAN PATENT SPECIFICATION

(11) **EP 4 280 886 B1**
(45) Date of publication and mention of the grant of the patent: **18.03.2026**
(21) Application number: 22730969.7
(22) Date of filing: 17.01.2022
(51) Int. Cl.: A23C 19/045, A23C 9/142, A23C 19/076, A23C 19/09

(54) **A METHOD FOR THE MANUFACTURE OF A CREAM CHEESE**
EIN VERFAHREN ZUR HERSTELLUNG EINES FRISCHKÄSES
PROCÉDÉ DE FABRICATION DE FROMAGE À LA CRÈME

(30) Priority: 19.01.2021 GB 202100677
(43) Date of publication of application: 29.11.2023
(73) Proprietor: Intercontinental Great Brands LLC, East Hanover, NJ 07936 (US)
(72) Inventor: TORO-SIERRA, José, 82008 München (DE); DANG, Christine Bich Phuong, 82008 München (DE)
(74) Representative: Boult Wade Tennant LLP
(86) International application number: PCT/IB2022/050339
(87) International publication number: WO 2022/157611

(56) References cited:
- EP-A1- 2 649 884
- EP-B1- 1 698 231
- US-A1- 2018 249 733

## Description

The present invention relates to a method for the manufacture of a cream cheese and, in particular, to the provision of a cream cheese containing ideal whey protein.

Cream cheese is a soft cheese made from ingredients including milk and cream, and is generally spreadable. It is also generally mild-tasting, however, flavourings can be added to give it a specific flavour, such as garlic cream cheese. Cream cheeses can include single cream cheese and double cream cheese. Cream cheese also typically comes in various fat contents, including full-fat, low-fat, and extra-light.

Cream cheese has been popular in many places around the world for many years. Cream cheese can be used in many different culinary areas, as the consumer desires, but is most commonly used on bagels, in salads, as an ingredient in flavoured spreads, frostings, and cheesecake, as well as being used as an ingredient in various food recipes, such as pastas and traybakes. Various different methods of making cream cheese have been developed and used over the years. Most of these methods typically involve standardizing cream and milk with a specific fat:protein ratio, followed by pasteurization, fermentation, forming a coagulum, stirring, centrifugal separation, ultrafiltration or cloth to yield sour whey and concentrated curd, eventually blending the concentrated curd with cream, heating, possible addition of stabilizers and/or gums, and packaging the cream cheese.

Although stabilisers and additives can be incorporated into the cream cheese mixture, it is generally undesirable to include more additives in cream cheeses, as consumers prefer cream cheeses with more natural products, and minimum amounts of additives.

EP2649884 discloses a known method of producing cream cheese, which includes the steps of: preparing a milk blend; subjecting the milk blend to fermentation; and preparing cream cheese from the fermented milk blend; wherein a casein-enriched milk fraction is used in the preparation of the milk blend. The preferred method involves the production of ideal whey as a waste stream.

One of the challenges surrounding the manufacture of cream cheese in a plant that produces various different types of dairy products is that there are often waste streams of whey protein solutions that are produced from these processes, including waste streams of sweet whey protein from hard cheese making processes. Tackling this is of importance for environmental sustainability in the manufacturing of foods like cream cheese.

These waste streams often contain valuable ingredients that could be used in other dairy products, and are usually produced at specific points in the manufacture of other cheese or dairy products. In particular, various cheese-making processes result in side streams of sweet whey (including ideal whey and/or non-ideal whey), and/or sour whey. These can be produced in various amounts and concentrations at different stages of cheese or other dairy product manufacturing processes.

When one or more side streams of a whey protein solution are produced, they generally need to be used within a short period of time, and preferably as they are generated. If the whey protein solutions are not used quickly, large storage tanks are needed to store the solutions at reduced temperatures, or the solution must be disposed of, which is wasteful. Furthermore, using the waste streams of whey protein solutions can reduce the cost for the manufacturer, as these ingredients clearly come at a much lower cost than the alternative of buying the ingredients and having them transported to the plant.

Using whey protein and/or whey protein concentrates in cheese manufacturing methods is generally known in the art. EP 2649884 discloses the use of whey protein concentrates in cheese making.

In a preferred process to manufacture cream cheese, the cream cheese mixture is subjected to a texture-building heat-treatment step that is used to build up the creamy texture during manufacture of cream cheese. EP 2649884 describes a texturizing step done by subjecting the mixture to heating and shearing, for example at a temperature of from 65 to 90 °C. This texturizing step is performed on a mixture of the cheese curds and a whey protein concentrate. Before the texture building step, the whey protein additive is heat treated to denature the whey protein. This heat treatment step has generally been done using any conventional heating means. The heat treatment step is described as S6-1 or S6-2 in EP 2649884, and is usually done with simultaneous homogenization.

Various heating methods are known in the art. These include pasteurisation methods by batch heating, short time heating, or high temperature heating. Autoclaves can also be used for the heating of milk. The combined process of heating and homogenising involves forcing the mixture through small openings under high pressure with simultaneous heating to a predetermined temperature. These methods have been reliably used in cream cheese manufacturing methods.

Cavitation is generally known in the art as a method of providing a heat treatment. The process of cavitation generally includes heating, mixing and micro-particulating solutions, and has been known as an alternative heating method for dairy-containing mixtures. US 20180249733 discloses a process of microparticulating ideal whey protein with a cavitator to produce microparticulated ideal whey protein preparation having a creamy and thick texture. In particular, the microparticulated ideal whey protein preparation is used in a milk or dairy-based product, including cheese, yoghurt and quark.

As described above, it would be desirable to provide a method of manufacturing cream cheese that enables the use of a whey protein solution containing ideal whey protein. This would address issues with excess waste streams. It is therefore desirable to provide a method for manufacturing cream cheese that can use ideal whey protein solution to form a cheese with a desirable texture, taste and mouthfeel.

Accordingly, it is desirable to provide a cream cheese with a conventional texture whilst incorporating ideal whey protein and/or to tackle at least some of the problems associated with the prior art or, at least, to provide a commercially viable alternative thereto.

According to a first aspect there is provided a method for the manufacture of a cream cheese, the method comprising:
(i) providing a whey protein solution comprising ideal whey,
(ii) providing cheese curds,
(iii) subjecting the whey protein solution to a cavitation treatment sufficient to heat the whey protein solution to a temperature of from 80°C to 90°C to provide a heat-treated whey protein solution,
(iv) mixing the cheese curds and the heat-treated whey protein solution to form a mixture, and
(v) subjecting the mixture to a texture-building heat-treatment to form the cream cheese; wherein the texture-building heat-treatment comprises heating the mixture to a temperature of from 65°C to 90°C with shearing for a period of at least 15 minutes.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Surprisingly, the present inventors have found that when providing a heat-treated whey protein solution which contains ideal whey which has been heated by a conventional heating method, as in EP 1 698 231 B1, then the texturizing step will not work, and the cream cheese does not build a desirable creamy texture and mouthfeel. That is, a conventionally heat treated whey protein concentrate (WPC) which comprises ideal whey cannot be used in the method of texture building as disclosed in EP2649884.

Adding these solutions into the mixture results in cream cheeses that are not of an appropriate texture, taste and mouthfeel. Instead, the cream cheeses produced are watery and lack the desired texture. The failure of these cream cheeses can be measured using the stevens hardness test (cold), where a cream cheese should have a value of around 100g, and certainly at least 80g. A cream cheese prepared with a conventionally heat-treated ideal whey additive would struggle to show a value of 40g. The cold stevens hardness test is performed using a texture analyser, and includes measuring the peak force needed to puncture the cream cheese product with a conical 45° probe.

This has proven problematic, as there are large quantities of whey protein solution by-products having or consisting of ideal whey protein. It is therefore desirable to be able to use whey protein solutions containing ideal whey in the manufacture of cream cheese to develop cream cheeses with a desired texture and mouthfeel.

However, the Applicant unexpectedly found that the use of a cavitation treatment sufficient to heat the whey protein solution to a temperature of from 80°C to 90°C allows ideal whey protein to be used as an ingredient in the cream cheese. In particular, it was found that including a cavitation step to heat the whey protein solution containing ideal whey unexpectedly resulted in a heat-treated whey protein solution that is compatible with being used in the texture-building heat-treatment step to develop and build a creamy texture. This reduces waste of the ideal whey and increases the process efficiency.

The present invention relates to a method for the manufacture of a cream cheese. As noted above, a cream cheese is a soft cheese made from ingredients including milk and cream, and is generally spreadable and mild-tasting.

Cream cheese can be sold with a range of different fat contents. For example, ranges of cream cheese widely available are full-fat, low-fat, and extra-light cream cheese. Lighter cream cheeses tend to rely on the addition of more protein, gums and stabilisers in order to retain their desirable creamy texture.

The method involves providing a whey protein solution comprising ideal whey. Whey is the liquid that remains after a dairy liquid has been curdled and then strained. Curdling is usually done by adding rennet or lactic acid to the dairy liquid to cause the casein to curdle and separate into lumps. Whey protein is usually produced as a by-product of the manufacture of cheese or casein, and has several commercial uses. In the manufacture of cream cheese the curdling is performed with the use of a culture which develops lactic acid and naturally curdles the milk solution. In the case of cream cheese, the dairy liquid is typically a protein fortified cream, with the protein being provided as a milk concentrate.

There are various types of whey protein solutions, including sour whey and sweet whey. Sweet whey is a by-product resulting from the manufacture of rennet types of hard cheese, like cheddar cheese and Swiss cheese. It may also be known as "rennet whey". The rennet is added to cause the milk to curdle, and the resulting liquid solution is a sweet whey solution because it has a more neutral pH (around 6.5, such as 6.3-6.8) as its production either does not involve acidification, or involves only a very mild acidification. In sweet whey produced with rennet the whey proteins can be somewhat denatured.

Sour whey (also known as acid whey) is a by-product of making acid types of dairy products, such as cottage cheese or strained yoghurt. The sour whey is acidic because lactic acid is used to cause the milk to curdle, and so the pH of the whey protein solution is reduced to yield acid/sour whey (such as around 4.7, such as 4.4 to 4.9). In acid whey the whey proteins can be somewhat denatured.

Ideal whey is whey which contains undenatured or "native" whey protein. This is generally obtained by filtering milk with a suitably sized membrane. Ideal whey can be considered to be a sweet whey because it also has a more neutral pH of around 6.5, such as 6.3-6.8, because it has never been acidified. Accordingly, ideal whey may be classified as a sweet whey because of its pH and so sweet whey can contain a mixture of ideal whey and/or non-ideal whey. Ideal whey obtained from filtering milk is free from somatic cells, lactic acid bacteria, bacteriophages, remnants of rennet like caseinomacropeptide, and cheese fines, which can be present in sweet whey obtained from a cheese-making process.

The whey protein solution used in the method of the present invention contains ideal whey and can also contain sour whey and sweet whey, with all being in various amounts and concentrations. The whey protein solution is discussed in more detail below.

Preferably, the whey protein solution is provided at room temperature, and more preferably at a temperature of 10 °C or less. This is optimum for the stability of the whey protein solution.

In one embodiment, the whey protein solution comprises sweet whey, and concentrated sweet whey. The sweet whey comprises ideal whey. In another more preferable embodiment, the whey protein solution comprises sweet whey, concentrated sweet whey, and sour whey. When only sweet whey and concentrated sweet whey are present in the whey protein solution (e.g. when there is no available sour whey that has been produced as a by-product in the plant), then the whey protein solution is preferably made up of from 2 to 15 wt.% concentrated sweet whey, and from 85 to 98 wt.% sweet whey, more preferably 5 to 10 wt.% concentrated sweet whey and 90 to 95 wt.% sweet whey, and most preferably about 7 wt.% concentrated sweet whey and about 93 wt.% sweet whey.

Preferably, the ideal whey is obtained by micro-filtering milk. Micro-filtration of milk, and particularly of skim milk, results in a microfiltration permeate containing ideal whey. This method is the simplest way to produce the ideal whey. The retentate is a casein-rich protein concentrate which is used in cream cheese manufacture in combination with the cream component.

The method involves a first step of providing cheese curds. Suitable cheese curds for the manufacture of cream cheese are well known in the art. Preferably, the cheese curds are obtained in a method comprising: providing a dairy liquid comprising cream, milk (either raw or processed milk that has been pasteurised and homogenised), and a micro-filtered milk concentrate; fermenting the dairy liquid to form the cheese curds and a sour whey; and separating the cheese curds from the sour whey by ultrafiltration. This is the most efficient way to produce the desired curds for use in cream cheese manufacture. More preferably, the fermentation is by mesophilic fermentation. Optionally, the dairy liquid may also be pasteurised and homogenised before the fermentation step.

By a dairy liquid it is meant a liquid derived from milk or components thereof. In particular, a dairy liquid contains fractions including milk and/or cream components. Preferably, the dairy liquid predominantly comprises cream and optionally a milk protein concentrate.

Preferably, the dairy liquid is obtained by: separating milk into cream and skimmed milk, micro-filtering the skimmed milk to produce a micro-filtered milk concentrate as a retentate and sweet ideal whey as a permeate, and mixing the cream and micro-filtered milk concentrate together with milk to form the dairy liquid. This method is a reliable way of producing a dairy liquid with the desired properties for cream cheese manufacture. This process provides both the micro-filtered milk concentrate needed to make the cheese curds, but also provides a source of ideal whey which can be used in the present invention. Such whey curds would need to be discarded, but for the developments discussed herein.

Preferably, the whey protein solution is then subjected to ultrafiltration, and more preferably wherein the ultrafiltration is sufficient to concentrate a protein content of the whey protein solution by a factor of at least 2, preferably at least 3, more preferably at least 6X, or at least 8X, and even more preferably up to 15X, such as 8 to 12X. This step of concentrating the whey protein solution reduces the water content in the solution and makes the subsequent texture-building heat treatment step (v) easier and more efficient to perform.

In this step of subjecting the whey protein solution to ultrafiltration, the total solids content is preferably increased from an amount of from typically 2 to 10 wt.% total solids content to an amount of from 20 to 50 wt.% total solids content, by weight of the whey protein solution. Furthermore, this step also preferably removes the lactose and minerals that are soluble in the aqueous solution.

Preferably, the pH of the concentrated whey protein solution is then adjusted before the cavitation step to obtain a final pH of from 4.5 to 5.1, more preferably from 4.8 to 4.9. Adjusting the pH of the concentrated whey protein solution can be done by either addition of citric acid, or by fermentation with lactic acid bacteria, but is preferably done by the addition of citric acid. When the whey protein solution is made up using only sweet whey and concentrated sweet whey, then citric acid is preferably used to reduce the pH to a desired value. However, when the whey protein solution is made up using sweet whey, concentrated sweet whey, and sour whey, then the sour whey acts to lower the pH, and less citric acid, if any, is needed.

The method further comprises subjecting the concentrated whey protein solution which contains ideal whey to a cavitation treatment sufficient to heat the whey protein solution to a temperature of from 80°C to 90°C to provide a heat-treated whey protein solution. The cavitation step is particularly advantageous in heat-treating the whey protein solution in a specific way that enables the whey protein solution to then develop a creamy texture (with the other ingredients) in the subsequent texture-building heat treatment step (v). The cavitation can be performed in accordance with the teaching of US 2018024973.

Preferably, the cavitation treatment is sufficient to heat the whey protein solution to a temperature of from 80 to 85 ºC. This is the ideal temperature to which the whey protein solution should be heated in order for it to be compatible with the texture-building heat-treatment step (v).

The method further comprises mixing the cheese curds and the heat-treated whey protein solution to form a mixture. The mixing may be performed with a stirrer, shaker, rotation device, or other commonly-used means for mixing ingredients. Preferably, mixing the cheese curds and the heat-treated whey protein solution is done by homogenisation.

Preferably, the heat-treated whey protein solution is added to the cheese curds in a weight ratio of heat-treated whey protein solution to cheese curds of from 1:19 to 2:3, preferably 1:15 to 1:5. This ratio is the optimum ratio for the subsequent texture-building heat-treatment step, in order to yield a cream cheese with a desirable creamy texture.

The method further comprises subjecting the mixture to a texture-building heat-treatment step to form the cream cheese. Such a process preferably comprises heating the mixture to a temperature of from 65 to 90ºC with shearing for a period of at least 15 minutes. Such a process is described in more detail in EP 2649884.

Preferably, the whey protein solution comprises sweet whey comprising ideal whey from micro-filtering the skimmed milk and, optionally, ideal whey from a hard cheese-making process. Using the ideal whey formed during the micro-filtering of the skimmed milk (i.e. from the process to make the dairy liquid) is a beneficial way of using the by-product ideal whey rather than disposing of the by-product. Furthermore, using ideal whey from a hard-cheese making process also beneficially enables the use of a by-product that would otherwise be disposed of during the manufacture of hard cheeses.

Preferably, the method further comprises concentrating at least a portion of the ideal whey to form a concentrated ideal whey. This is important to increase the solids concentration before the cavitation step, which assists in enabling the cavitation to heat the whey protein solution sufficiently. Preferably, the solids levels before the cavitation are from 15 to 25wt%, preferably 17 to 23wt%, of which 25 to 75wt% are whey proteins, preferably 40 to 60% and preferably about 50%. Preferably, the total protein content is between 7 and 20 wt.%, and more preferably between 10 and 15 wt.%.

Preferably, the whey protein solution comprises sour whey from fermenting a dairy liquid, preferably the dairy liquid used to provide the cheese curds. Using sour whey from the step of fermenting the dairy liquid (to create the cheese curds and sour whey) is beneficial as it enables this by-product to be used in cream cheese manufacturing rather than being discarded.

Preferably, the whey protein solution is formed by mixing sour whey from fermenting the dairy liquid and sweet whey comprising ideal whey from micro-filtering the skimmed milk and, optionally, sweet whey from a hard cheese-making process. Using sour whey from the step of fermenting the dairy liquid, and sweet whey from the step of micro-filtering the skimmed milk beneficially allows these waste streams to be reused. In the same way, using sweet whey from a hard cheese-making process enables the use of sweet whey that can be generated in large quantities and would otherwise need to be stored at a reduced temperature or be disposed of. The use of sour whey also adds beneficial flavour notes and can be used to adjust the product pH.

Preferably, at least a portion of the sweet whey comprising ideal whey has been pre-concentrated to form a concentrated sweet whey. Concentrating the sweet whey is beneficial as a more concentrated solution enables the texture building and heat-treatment process to be performed more easily and quickly. This also helps to build the protein levels in the final product.

Preferably, the whey protein solution comprises from 15 to 30wt% solids, preferably 18 to 27% and more preferably 20 to 25wt%, before the cavitation step. This is the optimum solids content of the whey protein solution for obtaining a cream cheese with the desired creamy texture. The solids content of whey, whatever its origin, can be increased by eliminating water via evaporation, reverse osmosis or nano-filtration. These technologies are widely known and applied in the dairy industry.

Preferably, the whey protein solution has a pH of from 5.7 to 6.1 when it is initially formed from the sweet whey, concentrated sweet whey and sour whey. This is the optimum pH range of the whey protein solution in order to solubilise the minerals to a desired degree. If these are not removed then the texturizing step is unlikely to work. This can be achieved by providing a blend of sour and sweet wheys, since the value lies between their natural values. Citric acid can be added to further adjust the pH or if no sour whey is present.

The preferred pH of the whey protein solution before being subjected to the cavitation step (iii) is between 4.6 and 5.0, and even more preferably about 4.8. Preferably, the pH is adjusted by addition of citric acid.

Preferably, the ideal whey comprises from 10 to 100wt% of the protein in the whey protein solution, preferably from 15 to 85wt% and most preferably from 20 to 70wt%. Having 10 to 100wt.% of the total protein content being ideal whey protein provides scope for different amounts of ideal whey to be incorporated into the solution, depending on what relative proportions of whey protein by-products have been produced and are available at that time.

Therefore, the process can be adapted to use whey protein solutions having different compositional make-up to suit the relative abundance of different types of whey protein solutions at that time. It is preferred for the amount of ideal whey protein to be from 20 to 70 wt.% of the total whey protein, as this enables the texturizing step to be performed more quickly and with greater ease. Preferably, the whey protein solution is formed by mixing:
20 to 40wt% acid whey comprising from 4 to 8wt% solids (preferably about 6wt%);
40 to 60wt% sweet whey comprising from 4 to 8wt% solids (preferably about 6wt%); and
10 to 30wt% concentrated sweet whey comprising from 20 to 40wt% solids (preferably about 30wt%).

More preferably the whey protein solution is formed by mixing:
20 to 35wt% acid whey comprising from 4 to 8wt% solids (preferably about 6wt%);
45 to 60wt% sweet whey comprising from 4 to 8wt% solids (preferably about 6wt%); and
15 to 25wt% concentrated sweet whey comprising from 20 to 40wt% solids (preferably about 30wt%).

Even more preferably the whey protein solution is formed by mixing:
About 20 to 25wt% acid whey comprising from 4 to 8wt% solids (preferably about 6wt%);
About 54 to 59wt% sweet whey comprising from 4 to 8wt% solids (preferably about 6wt%); and
About 20 to 25wt% concentrated sweet whey comprising from 20 to 40wt% solids (preferably about 20wt%).

This specific mixture of acid whey, sweet whey and concentrated sweet whey provides a whey protein solution that has a solids and content that is optimum for use in cavitation treatment and subsequent texture-building heat treatment to form a cream cheese with the desired texture and taste.

The whey protein solution may also be formed by mixing four streams, which are:
20 to 40 wt% acid whey comprising from 4 to 8wt% solids;
5 to 15 wt.% sweet rennet whey concentrate comprising from 20 to 40wt.% solids;
30 to 55 wt.% sweet ideal whey comprising from 4 to 6 wt.% solids; and
5 to 15 wt.% sweet ideal whey concentrate comprising 20 to 40 wt% solids.

More preferably, the whey protein solution is formed by mixing:
25 to 35 wt% acid whey comprising from 4 to 8wt% solids;
8 to 12 wt.% sweet rennet whey concentrate comprising from 20 to 40wt.% solids;
46 to 52 wt.% sweet ideal whey comprising from 4 to 6 wt.% solids; and
8 to 12 wt.% sweet ideal whey concentrate comprising 20 to 40 wt% solids.

The use of these four streams allows a variety of whey protein solutions that would otherwise be waste products, to be used successfully in the manufacture of cream cheese.

Preferably, the method further comprises filling the cream cheese into packaging, preferably directly from the texture-building heat-treatment. Filling the cream cheese into packaging directly from the texture-building heat-treatment allows the liquid cream cheese (that is liquid due to still being warm) to be easily poured into the packaging, and to set in the packaging, rather than having to be cut into slices to be packaged, which is more efficient. The cream cheese is then preferably allowed to cool in a cooling chamber for at least 12 hours before a sensory evaluation. The cream cheese will then be sent for sale within a few days or weeks.

Preferably, the step of mixing the cheese curds and the heat-treated whey protein solution to form a mixture further comprises the addition of one or more further ingredients selected from the group consisting of milk solids, salt, stabilisers and gums. These further ingredients can help to give the cream cheese a longer shelf life.

Preferably, the method is a continuous process from the step of subjecting the whey protein solution to a cavitation treatment to the formation of the cream cheese. Having steps (iii) to (v) as a continuous process is beneficial as the equipment can be used at maximum efficiency, and storage mediums to hold mixtures for significant periods of time in between the steps are not required.

According to a further aspect there is provided a cream cheese obtainable by the method described herein. The cream cheese obtained by the method is unique and can be distinguished from other cream cheeses. In particular, it has a smaller particle size when inspected through a microscope due to the cavitation process and it has a more homogeneous texture as a consequence of the texture building step. This combination of features provides an improved cream cheese product containing ideal whey protein.

Preferably, the cream cheese comprises less than 33wt% total solids. The process beneficially enables cream cheese to be produced with less than 33 wt% total solids, while still having a creamy mouthfeel and texture, which enables more cream cheese to be produced for a given amount of solids. This range distinguishes the cream cheese obtained with a textured building step from cream cheese which has not been produced with such a step. For example, a full fat cream cheese might have 32.5wt% total solids when made with a texture building step, but around 37wt% without. A light cream cheese might have 26wt% total solids when made with a texture building step, but around 35wt% without.

Preferably, the cream cheese is a full-fat cream cheese with a fat content of less than 63 wt.%.

Preferably, when the method includes the additional step (between step (ii) and step (iii)) of subjecting the whey protein solution to ultrafiltration, and more preferably wherein the ultrafiltration is sufficient to concentrate a protein content of the whey protein solution by a factor of at least 3, this results in a whey protein concentrate. The whey protein concentrate has between 20 and 25 wt.% solids, of which 50 to 60 wt.% is whey protein.

The resulting whey protein concentrate can then be incorporated into the final cream cheese in different amounts, to result in cream cheeses with different fat contents. In particular, a full fat cream cheese can be made which has 6 to 8 wt.% of whey protein concentrate, by weight of the cream cheese. A light cream cheese product has from 10 to 14 wt.% whey protein concentrate, by weight of the cream cheese; and an extra-light cream cheese product has from 35 to 40 wt.% whey protein concentrate, by weight of the cream cheese product. Incorporating more whey protein concentrate into the cream cheese enables less fat to be in the final product, whilst still being able to develop the creamy texture in the texture-building heat-treatment step.

According to one embodiment the product is a full fat cream cheese and 6-8wt% of product is WPC. WPC is 23wt% solids of which 50-60wt% is protein. According to another embodiment, the product is a light cream cheese and 10-14wt% of product is WPC. WPC is 23wt% solids of which 50-60wt% is protein. According to another embodiment the cream cheese is an Extra light cream cheese and 35 to 40wt% of product is WPC. WPC is 23wt% solids of which 50-60wt% is protein.

The invention will now be described in relation to the following non-limiting figures, in which:
- Figure 1 shows a flow chart of a method of manufacturing cream cheese according to the prior art.
- Figure 2 shows a flow chart of the method described herein.

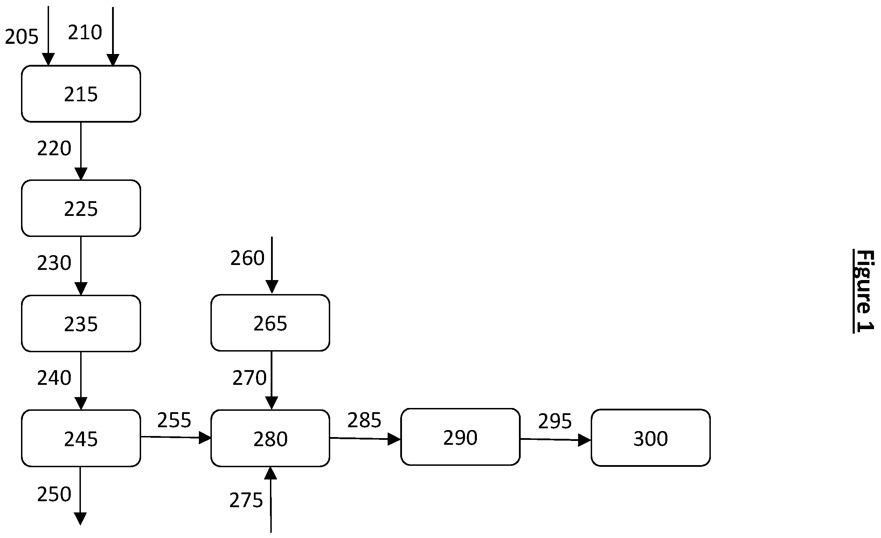

With regard to Figure 1, a raw milk 205 and cream 210 are mixed in a mixing unit 215. The mixture 220 of raw milk 205 and cream 210 is then passed to a pasteurisation/ homogenisation unit 225, where the mixture 220 is subjected to pasteurisation and homogenisation.

The resulting pasteurised mixture 230 is passed to a fermentation unit 235, where the pasteurised mixture 230 is fermented with an added culture.

The fermented mixture 240 is then passed to a concentration unit for curd 245, where the sour whey 250 is removed and the curds 255 are passed to a mixing unit 280. The concentration unit for curd 245 may also be referred to as a separator.

Whey protein concentrate 270 and additional ingredients 275 are added to the mixing unit 280, to be mixed with the curds 255. The additional ingredients 275 include additives and stabilisers.

The whey protein concentrate 270 comprises heat-treated sour and sweet wheys and has a solids level of 20-25wt%, of which about half is whey protein. The whey protein concentrate 270 is obtained by providing a whey protein solution 260 containing sweet whey and sour whey, and passing the whey protein solution 260 to a heating and homogenisation unit 265, where the whey protein solution 260 is subjected to a process of homogenisation with simultaneous heating to denature the whey protein.

The heated and homogenised mixture 270 is then mixed with the curds 255 and other additional ingredients 275 in the mixing unit 280 to provide a combined mixture 285. The combined mixture 285 is passed to a texture-building heat-treatment unit 290, where the combined mixture 285 is heated to a temperature of from 65 to 90ºC, preferably about 80 °C, with shearing for a period of at least 15 minutes, to provide a cream cheese product 295.

The cream cheese product 295 is then sent to a packaging facility 300, whilst it is still at an elevated temperature, to be packaged into containers.

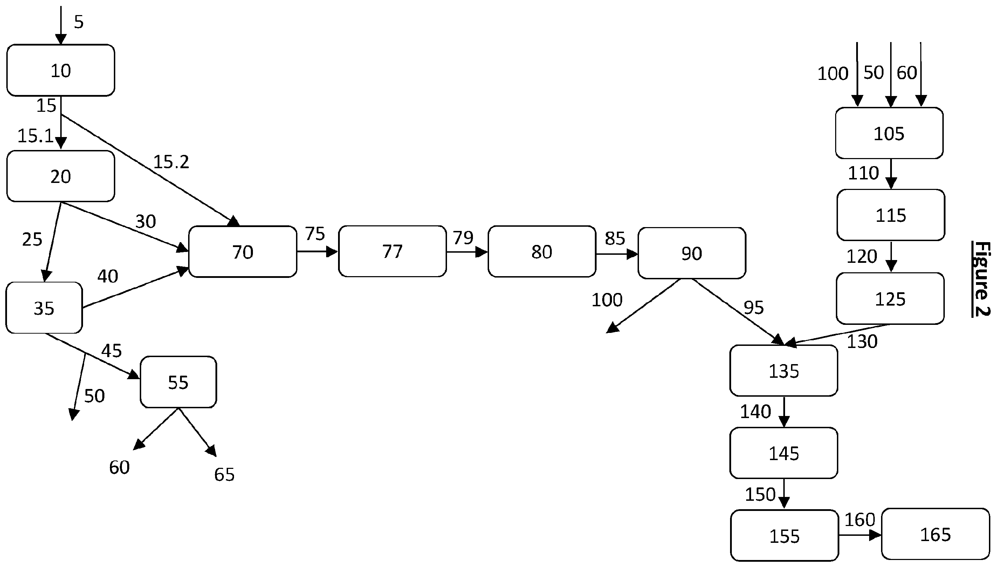

With regard to Figure 2, a raw milk 5 is provided. This is subjected to a treatment 10 to pasteurise and/or homogenise the raw milk 5 and provide a processed milk 15 suitable for cheese-making.

A first portion 15.1 of the processed milk 15 is passed to a centrifugal separator 20 to separate a skimmed milk 25 from a cream 30.

The skimmed milk 25 is passed to a microfiltration unit 35, where a micro-filtered milk concentrate 40 is retained as a retentate. The retentate is primarily a casein rich concentrate. The microfiltration unit 35 also produces a sweet whey permeate 45. The sweet whey permeate 45 comprises ideal whey.

A portion 50 of the sweet whey permeate is retained, and a portion of the sweet whey permeate 45 is then passed to a first evaporation unit 55 to concentrate the sweet whey permeate to form a concentrated sweet whey solution 60 and water 65.

The micro-filtered milk concentrate 40, the cream 30, and a second portion 15.2 of processed milk 15 are passed to a mixer 70 to form a dairy liquid 75. The dairy liquid 75 is then pasteurised and homogenised in a pasteurisation and homogenisation unit 77. The resulting pasteurised and homogenised dairy liquid 79 is then passed to a fermentation device 80 to ferment the dairy liquid to form a mixture 85 of cheese curds 95 and sour whey 100.

The mixture 85 is passed to a concentration unit 90, for ultrafiltration and to separate the cheese curds 95 from the sour whey 100.

Sour whey 100, sweet whey 50 and concentrated sweet whey 60 are mixed together in a mixing unit 105 to form a whey protein solution 110. The whey protein solution 110 is passed to an ultrafiltration unit 115 to concentrate the protein content of the whey protein solution 110 by a factor of at least 3 to produce a concentrated whey protein solution 120.

The pH of the concentrated whey protein solution 120 is adjusted to be between 4.8 and 4.9 by the addition of citric acid, before it is then passed to a cavitator 125 where the concentrated whey protein solution 120 is subjected to cavitation treatment sufficient to heat the solution to a temperature of at least 70 °C, preferably about 80 °C to provide a heat-treated whey protein solution 130.

The concentrated heat-treated whey protein solution 130 and the cheese curds 95 are mixed in a mixer 135 to form a first mixture 140. The first mixture 140 is passed to a pasteurisation and homogenisation unit 145 which subjects the mixture to pasteurisation and homogenisation to produce a pasteurised and homogenised first mixture 150. The pasteurised and homogenised first mixture 150 is then passed to a texturization unit 155, which subjects the mixture 150 to a texture-building heat-treatment process that includes heating the mixture 150 to a temperature of from 65 to 90ºC with shearing for a period of at least 15 minutes. This step then provides a cream cheese 160.

The cream cheese is then filled into packages whilst it is still warm, in a filling step 165.

The invention will now be described in relation to the following non-limiting example.

### Examples

### Example 1

A whey protein solution was produced by mixing of following streams to a total amount of 100 weight percent:
- Acid whey with 6.0% total solids, resulting from separation via centrifugation of fermented curds and whey in the cream cheese process in an amount of 20 wt.%,
- Sweet whey concentrate obtained from hard cheese production and subsequent evaporation to 30.0% total solids in an amount of 21 wt.%,
- Sweet ideal whey with 6.0% total solids from skim milk micro-filtration in an amount of 59 wt.%.

The pH of the whey protein solution occurs naturally at 6.0 due to the acid whey. This whey protein blend was then subjected to ultrafiltration with a 20 kDa UF Membrane for concentration with a factor of 10x. The resulting Concentrated Whey Protein solution had a composition of 25.0% total solids and 13% total protein, and its pH was further lowered to 4.9 with citric acid. This sour Whey Protein Concentrate was then sheared and heated with hydrodynamic cavitation, ready to be blended with cheese curds (i.e. Inventive Example 1). For comparison, the same blend was treated with a standard known procedure using heating and shearing in a stirred tank (i.e. Comparative Example 1). The resulting Particle Size Distribution was measured with Laser Scattering and the resulting crosslinking degree of the Whey Proteins was measured with Reversed Phase High Performance Liquid Chromatography. The WPC solutions had following characteristics:

| Sample | D10,3 [µm] | D50,3 [µm] | D90,3 [µm] | Crosslinking [%] |
|---|---|---|---|---|
| Acidified WPC (before treatment) | 0.076 | 0.333 | 3.492 | 13.0 |
| WPC after Cavitation (Inventive Example 1) | 0.460 | 1.619 | 102.7 | 82.0 |
| WPC after standard heat treatment (Comparative Example 1) | 4.568 | 10.271 | 38.936 | 62.0 |

During cream cheese manufacturing, heating of the WPC triggers crosslinking to occur, which results in the formation of particles. Although crosslinking is desired in order to increase the viscosity of the mixture (i.e. so that the cream cheese is not watery), more crosslinking tends to result in the formation of large particles. These large particles (most accurately represented by a high D50 value) make the resulting cream cheese feel rough, and give the cream cheese a granular consistency, which is not desired by a consumer.

While a larger crosslinking value in general is desired, it is particularly desirable to obtain a % crosslinking of about 50 to 85 %. The crosslinking is preferably no greater than 90%, and more preferably is from 50 to 85%, and even more preferably is from 60 to 80%, and even more preferably is from 65 to 75%. This optimal range of crosslinking provides a good balance between native and denatured protein. The native protein is still reactive while the denatured protein and its bigger surface help with water retention and network building. Therefore, there is a desire to increase the cross-linking, and particularly for it to be within a desired range, without increasing the D50 value too much that it causes a granular texture.

The use of cavitation technology during the heat treatment step of the WPC was surprisingly found to result in a high amount of crosslinking, as indicated by the 82 % of crosslinking for IE1, compared to 62 % for CE1, whilst maintaining the D50 value at an acceptable level.

In particular, a D50 value of 20 µm (i.e. indicating that 50% of the particles have a diameter of less than 20 µm) is an acceptable value, and more preferably, the D50 value is less than 20 µm, preferably less than 10 µm and most preferably less than 5 µm. IE1 has a D50 value of 1.619 µm, as opposed to a much higher value of 10.271 for CE1. Although both values are acceptable, the lower D50 value of IE1 compared to CE1 gives a smoother texture.

The D10 value of IE1 is also lower than the D10 value of CE1, indicating that there are more particles in IE1 with a smaller particle size. However, the D10 and D90 values are not of such an important significance as the D50 value, and the D10 and D90 values can be largely impacted by 'tail ends' of particle distribution sizes. Thus, maintaining a low D50 value while simultaneously achieving high crosslinking is desirable.

### Example 2:

A whey protein liquid was produced by mixing of following streams to 100 weight percent:
- Acid whey with 6.0% total solids, resulting from separation via centrifugation of fermented curds and whey in the cream cheese process in an amount of 20 wt.%,
- Sweet whey concentrate obtained from hard cheese production and subsequent evaporation to 30.0% total solids in an amount of 21 wt.%,
- Sweet ideal whey with 6.0% total solids from skim milk micro-filtration in an amount of 59 wt.%.

The pH of the whey protein solution occurs naturally at about 6.0 due to the acid whey. This whey blend was then subjected to ultrafiltration with a 20 kDa UF Membrane for concentration with a factor of 10x. The resulting Concentrated Whey Protein had a composition of 25.0% total solids and 13% total protein. This sour Whey Protein Concentrate was then fermented with lactic acid bacteria at 20 °C until it reached pH 4.9 and was subsequently sheared and heated with hydrodynamic cavitation. The resulting Particle Size Distribution was measured with Laser Scattering and the resulting crosslinking degree of the Whey Protein solutions was measured with Reversed Phase High Performance Liquid Chromatography. The WPCs had following characteristics:

| Sample | D10,3 [µm] | D50,3 [µm] | D90,3 [µm] | Crosslinking [%] |
|---|---|---|---|---|
| WPC at pH 6.0 | 0.065 | 0.235 | 1.011 | 5.0 |
| WPC after Fermentation | 0.175 | 3.559 | 7.596 | 4.0 |
| WPC after Cavitation and fermentation | 0.363 | 4.236 | 255.786 | 98.0 |

As can be seen, the step of shearing and heating the fermented WPC with cavitation resulted in a significant increase in crosslinking, from 4 % to 98%. Although the inventors expected this to result in an increase in the D50 value, they surprisingly found that the D50 value increased only slightly, from 3.559 µm to 4.236 µm. The minor increase in D50 value of the fermented WPC shows the advantageous ability of the cavitation technology to increase the crosslinking while maintaining the D50 value of the mixture at an acceptably low value.

This Example also shows the ability to lower the pH of the sample by fermenting with lactic acid bacteria instead of adding citric acid (as done in the other examples). The low pH before WPC heat treatment is important in order to keep the particle sizes low. Fermentation with lactic acid bacteria gives a different flavour in the resulting cream cheese compared to lowering the pH using citric acid. This therefore enables different flavour notes to be created in the cream cheese end product, but shows that both methods (i.e. using fermentation with lactic acid, or adding citric acid) results in a WPC that is compatible with the cavitation step.

### Example 3

Milk, cream and micro-filtrated milk concentrate were blended to produce a dairy liquid, comprising 15wt.% solids, 5.5wt.% fat, 4wt.% protein and 4.5wt.% lactose. This dairy liquid was pasteurized, homogenized and subjected to mesophilic fermentation with lactic acid bacteria at 20 °C until a final pH between 4.8 and 5.0 was reached. After stirring of the formed coagulum, it was separated into concentrated curd and sour whey using membrane ultrafiltration. The curd was blended with a whey protein concentrate having 24% solids and 11% protein content. The whey protein concentrate consisted of sweet whey, acid whey and sweet whey concentrate as described in Example 1. The WPC was subjected to hydrodynamic cavitation with a denaturation degree of 50% (as described for IE1). The curd and whey protein mixture was then processed further with pasteurization and homogenization into a dairy liquid, which is then texturized with a final creaming step (i.e. a texture building heat treatment step), resulting in a thick and creamy fresh cheese product with cold Stevens Firmness of 90±5 g at 10 °C (i.e. IE3). For comparison, the same whey blend was heated with a standard known procedure (i.e. CE1) and blended with a separate portion of the same curd, then subjected to the described heat treatment including texturization, resulted in a cheese with cold Stevens Firmness of 80±10 g at 10 °C (i.e. CE3).

As can be seen, the cream cheese product IE3 that was produced from the WPC that was subjected to cavitation before the creaming step, resulted in a higher cold Stevens Firmness than the cream cheese product CE3 that was produced from the WPC that was subjected to only the standard heat treatment before the creaming step. This higher cold Stevens Firmness value is desirable in a cream cheese product as it is indicative of a more firm cream cheese that tastes thicker and more creamy to the consumer, as opposed to less firm cream cheeses which have a more watery texture.

These values show that dairy liquid produced in IE3 was more compatible with the creaming step, and was able to make a creamier, thicker cream cheese, whereas the dairy liquid produced in CE3 was not as compatible with the last creaming step, and so did not form a cream cheese with a firmness as high as that of IE3.

### Example 4

A whey protein solution was produced by mixing of following streams to a total amount of 100 weight percent:
- Acid whey with 6.0% total solids, resulting from separation via centrifugation of fermented curds and whey in the cream cheese process in an amount of 25 wt.%,
- Sweet ideal whey concentrate obtained from micro-filtration of skim milk at 10-15 °C and subsequent evaporation to 30.0% total solids in an amount of 21 wt.%,
- Sweet ideal whey with 6.0% total solids from skim milk micro-filtration in an amount of 54 wt.%.

The pH of the whey protein solution occurs naturally at about 6.0 due to the acid whey. This whey blend was then subjected to ultrafiltration with a 20 kDa UF Membrane for concentration with a factor of 12x. The resulting Concentrated Whey Protein had a composition of 20.3% total solids and 11.8% total protein and its pH was further lowered to 4.9 with citric acid. One sample of this sour Whey Protein Concentrate is then sheared and heated with hydrodynamic cavitation at a temperature of 76°C (IE4a) and another same is sheared and heated with hydrodynamic cavitation at a temperature of 81°C (IE4b). The resulting solutions were then ready to be blended with cheese curd. For comparison, the same blend was treated with a standard known procedure using heating and shearing in a stirred tank (CE4). The resulting Particle Size Distribution was measured with Laser Scattering and the resulting crosslinking degree of the Whey Proteins was measured with Reversed Phase High Performance Liquid Chromatography. The WPC solutions had the following characteristics:

| Sample | D10,3 [µm] | D50,3 [µm] | D90,3 [µm] | Crosslinking [%] |
|---|---|---|---|---|
| Acidified WPC | 0.310 | 4.335 | 11.797 | 4.0 |
| WPC after Cavitation 76 °C (IE4a) | 3.043 | 7.135 | 18.256 | 42.0 |
| WPC after Cavitation 81 °C (IE4b) | 5.593 | 14.533 | 45.436 | 75.0 |
| WPC after standard heat treatment (CE4) | 6.642 | 57.617 | 132.79 | 79.0 |

As can be seen, cavitation at 81 °C resulted in a higher percentage of crosslinking than cavitation at 76 °C, which is beneficial for obtaining the required viscosity to make cream cheese. Although CE4 (i.e. where the WPC was subjected to only standard heat treatment) had the highest percent of crosslinking, at 79%, the D50 value of CE4 was unacceptably high at 57.617 µm. Such a high D50 value results in a cream cheese with a granular and rough texture, which is not desirable to the consumer.

On the other hand, IE4a and IE4b maintained acceptable D50 values for cream cheese manufacturing. In addition, IE4b (that underwent cavitation at 81°C) was able to obtain a desirably high percentage of crosslinking, at 75 %, while maintaining an appropriately low D50 value.

### Example 5

Milk, cream and micro-filtrated milk concentrate were blended to produce a dairy liquid, comprising 15% solids, 5.5% fat, 4% protein and 4.5% lactose. This dairy liquid was pasteurized, homogenized and subjected to mesophilic fermentation with lactic acid bacteria at 20 °C to a final pH between 4.8 and 5.0. After stirring of the formed coagulum, it was separated into concentrated curd and whey using membrane ultrafiltration with a concentration factor of 2.2 to 2.5x. The curd was blended with a whey protein concentrate with 20.3% solids and 11.8% protein content. The whey protein concentrate consisted of ideal sweet whey, acid whey and ideal sweet whey concentrate as described in Example 4. The WPC was subjected to hydrodynamic cavitation at 81 °C with a denaturation degree of 75% (i.e. IE4b) prior to mixing with the curds (IE5). In addition, a second batch was prepared (CE5) by mixing a separate portion of the same curd with a separate portion of the same Whey Protein Concentrate after standard heat treatment to a denaturation degree of 79.0% (i.e. CE4). Both mixtures of the curd and their respective whey protein additions were then further processed in a separate manner with pasteurization and homogenization into a dairy liquid, which is then texturized with a final creaming step.

Surprisingly, it was found that in the comparative example containing standard heated Whey Protein Concentrate with higher amounts of ideal sweet whey, the cream cheese texturizing behavior was completely impaired. The dairy liquid was discarded as the mixture of curds and heated whey proteins remained flowable (i.e. the dairy liquid did not develop into a creamy homogenous cheese), as it did not develop any texture and the finished product had no measurable cold Stevens, while showing a viscosity of less than 400 mPa·s (400 cP), measured at 78 °C with a Rapid Visco Analyzer after texturization. By comparison, the cream cheese produced with Whey Protein Concentrate containing high amounts of ideal sweet whey and treated with hydrodynamic cavitation (i.e. IE5), showed a satisfactory texture development, with measured viscosity values of greater than 400 mPa·s (400 cP) at 78 °C after texturization. This resulted in a thick, spreadable and creamy fresh cheese product with cold Stevens Firmness of 90±5 g at 10 °C.

This data shows the improved compatibility of the dairy liquid with the creaming step, when the dairy liquid has WPC that was subjected to cavitation treatment, as opposed to WPC that was subjected to standard heat treatment. The higher viscosity of IE5, compared to CE5, demonstrates that when a WPC stream comprising high levels of ideal whey is used, then the cavitation step is necessary in order for the resulting mixture to be compatible with the creaming and texturizing step. If WPC solutions with high levels of ideal whey are used but first subjected to standard heat treatments, then the resulting solution is simply not compatible with the creaming/texturizing step, and an acceptable cream cheese cannot be produced.

### Example 6

A whey protein solution was produced by mixing of the following streams to a total amount of 100 weight percent:
- Acid (sour) whey with 6.0% total solids, resulting from separation via centrifugation of fermented curds and whey in the cream cheese process in an amount of 30 wt.%,
- Sweet rennet whey concentrate obtained from hard cheese production and subsequent evaporation to 30.0% total solids in an amount of 10 wt.%,
- Sweet ideal whey with 6.0% total solids from skim milk micro-filtration in an amount of 50 wt.%, and
- Sweet ideal whey concentrate obtained from micro-filtration of skim milk at 10-15 °C and subsequent evaporation to 30.0% total solids in an amount of 10 wt.%.

The pH of the whey protein solution occurs naturally at 6.0 due to the acid whey. This whey protein blend was then subjected to ultrafiltration with a 20 kDa UF Membrane for concentration with a factor of 11x. The resulting Concentrated Whey Protein solution had a composition of 20% total solids and 12% total protein, and its pH was further lowered to 4.91. This sour Whey Protein Concentrate was then sheared and heated with hydrodynamic cavitation at a temperature of 81°C, ready to be blended with cheese curds (i.e. Inventive Example 6). For comparison, the same blend was treated with a standard known procedure using heating and shearing in a stirred tank (i.e. Comparative Example 6). The resulting Particle Size Distribution of each sample was measured with Laser Scattering, and the resulting crosslinking degree of the WPC before treatment, and after cavitation, was measured with Reversed Phase High Performance Liquid Chromatography. The WPC solutions had following characteristics:

| Sample | D10,3 [µm] | D50,3 [µm] | D90,3 [µm] | Crosslinking [%] |
|---|---|---|---|---|
| Acidified WPC (before treatment) | 0.0571 | 0.292 | 5.22 | 3% |
| WPC after Cavitation (Inventive Example 6) | 0.305 | 3.01 | 7.25 | 85% |
| WPC after standard heat treatment (Comparative Example 6) | 5.58 | 212 | 346 | 55% |

As can be seen, IE6 showed a slight increase in D50, but still had an advantageously low value of 3.01 µm. On the other hand, CE6 showed a considerably larger increase to 212 µm, meaning a much more granular texture, which is not desirable. In addition, the WPC showed a very large and advantageous increase in percentage of crosslinking, indicating that the cavitation treatment enabled the WPC to form a sufficiently viscous composition, making it suitable for use in cream cheese. On the other hand, CE6 showed a lower degree of cross-linking, indicating that the sample did not form a sufficiently viscous product.

### Example 7

Milk, cream and micro-filtrated milk concentrate were blended to produce a dairy liquid, comprising 15% solids, 5.5% fat, 4% protein and 4.5% lactose. This dairy liquid was pasteurized, homogenized and subjected to mesophilic fermentation with lactic acid bacteria at 20 °C to a final pH between 4.8 and 5.0. After stirring of the formed coagulum, it was separated into concentrated curd and whey using membrane ultrafiltration with a concentration factor of 2.2 to 2.5x. The curd was blended with a whey protein concentrate with 20% solids and 12% protein content. The whey protein concentrate consisted of sweet rennet whey concentrate, sweet ideal whey, acid whey, and sweet ideal whey concentrate as described in Example 6. The WPC was subjected to hydrodynamic cavitation at 81 °C with a denaturation degree of 85% prior to mixing with the curds (IE7). In addition, a second batch was prepared (CE7) by mixing a separate portion of the same curd with a separate portion of the same Whey Protein Concentrate after standard heat treatment to a denaturation degree of 79.0% (i.e. CE6). Both mixtures of the curd and their respective whey protein additions were then further processed in a separate manner with pasteurization and homogenization into a dairy liquid, which was then texturized with a final creaming step (i.e. a texture building heat treatment step).

In the same way as described above for example 5, CE7 (which used a standard heat treatment), did not form a suitable cheese product, and did not have the necessary creamy texture. In particular, the resulting product of CE7 showed a viscosity of less than 400 mPa·s (400 cP), measured at 78 °C with a Rapid Visco Analyzer after texturization. By comparison, the cream cheese produced with Whey Protein Concentrate containing high amounts of ideal sweet whey and treated with hydrodynamic cavitation (i.e. IE7), showed a satisfactory texture development, with measured viscosity values of greater than 400 mPa·s (400 cP) at 78 °C after texturization. This resulted in a thick, spreadable and creamy fresh cheese product with cold Stevens Firmness of 85.0±1 g at 10 °C.

As can be seen, the cream cheese product IE7 that was produced from the cavitation-treated WPC had an adequate cold Stevens Firmness for forming a suitable cream cheese product. In summary, these values show that the dairy liquid produced in IE7 was more compatible with the creaming step, and was able to make a creamier, thicker cream cheese, whereas the dairy liquid produced in CE7 was not as compatible with the last creaming step, and so did not form a cream cheese with a firmness as high as (and a texture as desirable as) that of IE7.

Unless specified to the contrary, percentages herein are by weight.

References herein to "solids" refers to the material which is left once all water has been removed. Therefore, a solution comprising 20wt% solids also contains the balance (i.e. 80wt%) water.

Although preferred embodiments of the invention have been described herein in detail, it will be understood by those skilled in the art that variations may be made thereto without departing from the scope of the invention or of the appended claims.

## Claims

1. A method for the manufacture of a cream cheese, the method comprising:
(i) providing cheese curds,
(ii) providing a whey protein solution comprising ideal whey,
(iii) subjecting the whey protein solution to a cavitation treatment sufficient to heat the whey protein solution to a temperature of from 80°C to 90°C to provide a heat-treated whey protein solution,
(iv) mixing the cheese curds and the heat-treated whey protein solution to form a mixture, and
(v) subjecting the mixture to a texture-building heat-treatment to form the cream cheese; wherein the texture-building heat-treatment comprises heating the mixture to a temperature of from 65°C to 90°C with shearing for a period of at least 15 minutes; and
wherein ideal whey is whey that contains undenatured whey protein.

2. The method according to claim 1, wherein after step (ii) and before step (iii):
(a) the whey protein solution is subjected to ultrafiltration, preferably wherein the ultrafiltration is sufficient to concentrate a protein content of the whey protein solution by a factor of at least 3; and/or
(b) the pH of the whey protein solution is adjusted to obtain a pH of from 4.5 to 5.1, preferably from 4.8 to 4.9, by fermentation with lactic acid bacteria, or by addition of citric acid.

3. The method according to claim 1 or claim 2, wherein the cheese curds are obtained in a method comprising:
providing a dairy liquid comprising cream, a micro-filtered milk concentrate, and milk;
fermenting the dairy liquid to form the cheese curds and a sour whey; and
separating the cheese curds from the sour whey by ultrafiltration,
preferably wherein the dairy liquid is obtained by:
separating milk into cream and skimmed milk,
micro-filtering the skimmed milk to produce a micro-filtered milk concentrate as a retentate and ideal whey as a permeate, and
mixing the cream and micro-filtered milk concentrate together with the milk to form the dairy liquid.

4. The method according to claim 3, wherein the whey protein solution comprises sweet whey comprising ideal whey from micro-filtering the skimmed milk and, optionally, sweet ideal whey from a hard cheese-making process.

5. The method according to any of claims 3 to 4, wherein the method further comprises concentrating at least a portion of the ideal whey via evaporation, reverse osmosis or nano-filtration, to form a concentrated ideal whey.

6. The method according to claim 3 to 5, wherein the whey protein solution comprises sour whey from fermenting the dairy liquid, preferably wherein the whey protein solution is formed by mixing sour whey from fermenting the dairy liquid and sweet whey comprising ideal whey from micro-filtering the skimmed milk and, optionally, sweet whey from a hard cheese-making process, and preferably wherein at least a portion of the sweet whey comprising ideal whey has been pre-concentrated to form a concentrated sweet whey.

7. The method according to any preceding claim, wherein the whey protein solution:
(i) comprises from 15 to 30wt% solids; and/or
(ii) has a pH of from 5.7 to 6.1.

8. The method according to any preceding claim, wherein the ideal whey comprises from 10 to 100wt% of protein in the whey protein solution, preferably from 15 to 85wt% and most preferably from 20 to 70wt%.

9. The method according to any preceding claim, wherein the whey protein solution is formed by mixing:
20 to 40wt% acid whey comprising from 4 to 8wt% solids;
40 to 60wt% sweet whey comprising from 4 to 8wt% solids; and
10 to 30wt% concentrated sweet whey comprising from 20 to 40wt% solids.

10. The method according to any of claims 1 to 8, wherein the whey protein solution is formed by mixing:
20 to 40wt% acid whey comprising from 4 to 8wt% solids;
5 to 15 wt.% sweet rennet whey concentrate comprising from 20 to 40wt.% solids;
30 to 55 wt.% sweet ideal whey comprising from 4 to 6 wt.% solids; and
5 to 15 wt.% sweet ideal whey concentrate comprising 20 to 40 wt% solids.

11. The method according to any preceding claim, wherein the heat-treated whey protein solution is added to the cheese curds in a weight ratio of heat-treated whey protein solution to cheese curds of from 1:19 to 2:3.

12. The method according to any preceding claim, the method further comprising filling the cream cheese into packaging, preferably directly from the texture-building heat-treatment.

13. The method according to any preceding claim, wherein the step of mixing the cheese curds and the heat-treated whey protein solution to form a mixture further comprises the addition of one or more further ingredients selected from the group consisting of salt, stabilisers and gums.

14. The method according to any preceding claim, wherein the method is a continuous process from the step of subjecting the whey protein solution to a cavitation treatment to the formation of the cream cheese.

15. The method according to any preceding claim, wherein the cream cheese comprises less than 33wt% total solids.

## Patentansprüche

1. Verfahren zum Herstellen von Rahmkäse, wobei das Verfahren umfasst:
(i) Bereitstellen von Käsebruch,
(ii) Bereitstellen einer Molkenproteinlösung, die ideale Molke umfasst,
(iii) Unterziehen der Molkenproteinlösung einer Kavitationsbehandlung, die ausreicht, um die Molkenproteinlösung auf eine Temperatur von 80 °C bis 90 °C zu erhitzen, um eine wärmebehandelte Molkenproteinlösung bereitzustellen,
(iv) Mischen des Käsebruchs und der wärmebehandelten Molkenproteinlösung zum Bilden einer Mischung, und
(v) Unterziehen der Mischung einer texturbildenden Wärmebehandlung zum Bilden des Rahmkäses; wobei die texturbildende Wärmebehandlung das Erhitzen der Mischung auf eine Temperatur von 65 °C bis 90 °C unter Scherung für einen Zeitraum von mindestens 15 Minuten umfasst; und
wobei ideale Molke Molke ist, die unvergälltes Molkenprotein enthält.

2. Verfahren nach Anspruch 1, wobei nach Schritt (ii) und vor Schritt (iii):
(a) die Molkenproteinlösung einer Ultrafiltration unterzogen wird, vorzugsweise wobei die Ultrafiltration ausreichend ist, um einen Proteingehalt der Molkenproteinlösung um einen Faktor von mindestens 3 zu konzentrieren; und/oder
(b) der pH-Wert der Molkenproteinlösung angepasst wird, um einen pH-Wert von 4,5 bis 5,1, vorzugsweise von 4,8 bis 4,9, durch Fermentation mit Milchsäurebakterien oder durch Zugabe von Zitronensäure zu erhalten.

3. Verfahren nach Anspruch 1 oder 2, wobei der Käsebruch in einem Verfahren erhalten wird, das umfasst:
Bereitstellen einer Molkereiflüssigkeit, die Sahne, ein mikrofiltriertes Milchkonzentrat und Milch umfasst;
Fermentieren der Molkereiflüssigkeit zum Bilden des Käsebruchs und einer Sauermolke; und
Trennen des Käsebruchs von der Sauermolke durch Ultrafiltration,
vorzugsweise wobei die Molkereiflüssigkeit erhalten wird durch:
Trennen von Milch in Sahne und Magermilch,
Mikrofiltrieren der Magermilch zum Herstellen eines mikrofiltrierten Milchkonzentrats als ein Retentat und idealer Molke als ein Permeat, und
Mischen der Sahne und des mikrofiltrierten Milchkonzentrats zusammen mit der Milch zum Bilden der Molkereiflüssigkeit.

4. Verfahren nach Anspruch 3, wobei die Molkenproteinlösung Süßmolke umfasst, die ideale Molke aus der Mikrofiltration der Magermilch und gegebenenfalls ideale Süßmolke aus einem Hartkäseherstellungsprozess umfasst.

5. Verfahren nach einem der Ansprüche 3 bis 4, wobei das Verfahren ferner das Konzentrieren mindestens eines Teils der idealen Molke über Verdampfung, Umkehrosmose oder Nanofiltration zum Bilden einer konzentrierten idealen Molke umfasst.

6. Verfahren nach Anspruch 3 bis 5, wobei die Molkenproteinlösung Sauermolke aus der Fermentation der Molkereiflüssigkeit umfasst, vorzugsweise wobei die Molkenproteinlösung durch Mischen von Sauermolke aus der Fermentation der Molkereiflüssigkeit und Süßmolke, die ideale Molke aus der Mikrofiltration der Magermilch umfasst, und gegebenenfalls Süßmolke aus einem Hartkäseherstellungsprozess gebildet wird, und vorzugsweise wobei mindestens ein Teil der Süßmolke, die ideale Molke umfasst, zum Bilden einer konzentrierten Süßmolke vorkonzentriert wurde.

7. Verfahren nach einem der vorstehenden Ansprüche, wobei die Molkenproteinlösung:
(i) zu von 15 bis 30 Gew.-% Feststoffe umfasst; und/oder
(ii) einen pH-Wert von 5,7 bis 6,1 aufweist.

8. Verfahren nach einem der vorstehenden Ansprüche, wobei die ideale Molke zu von 10 bis 100 Gew.-% Protein in der Molkenproteinlösung umfasst, vorzugsweise zu von 15 bis 85 Gew.-% und am meisten bevorzugt zu von 20 bis 70 Gew.-%.

9. Verfahren nach einem der vorstehenden Ansprüche, wobei die Molkenproteinlösung durch Mischen wie folgt gebildet wird:
20 bis 40 Gew.-% Sauermolke, umfassend zu von 4 bis 8 Gew.-% Feststoffe;
40 bis 60 Gew.-% Süßmolke, umfassend zu von 4 bis 8 Gew.-% Feststoffe; und
10 bis 30 Gew.-% konzentrierte Süßmolke, umfassend zu von 20 bis 40 Gew.-% Feststoffe.

10. Verfahren nach einem der Ansprüche 1 bis 8, wobei die Molkenproteinlösung durch Mischen wie folgt gebildet wird:
20 bis 40 Gew.-% Sauermolke, umfassend zu von 4 bis 8 Gew.-% Feststoffe;
5 bis 15 Gew.-% süßes Labmolkenkonzentrat, umfassend zu von 20 bis 40 Gew.-% Feststoffe;
30 bis 55 Gew.-% süße ideale Molke, umfassend zu von 4 bis 6 Gew.-% Feststoffe; und
5 bis 15 Gew.-% süßes ideales Molkenkonzentrat, umfassend zu von 20 bis 40 Gew.-% Feststoffe.

11. Verfahren nach einem der vorstehenden Ansprüche, wobei die wärmebehandelte Molkenproteinlösung dem Käsebruch in einem Gewichtsverhältnis von wärmebehandelter Molkenproteinlösung zu Käsebruch von 1:19 bis 2:3 zugesetzt wird.

12. Verfahren nach einem der vorstehenden Ansprüche, wobei das Verfahren ferner das Abfüllen des Rahmkäses in Verpackungen umfasst, vorzugsweise direkt aus der texturbildenden Wärmebehandlung.

13. Verfahren nach einem der vorstehenden Ansprüche, wobei der Schritt des Mischens des Käsebruchs und der wärmebehandelten Molkenproteinlösung zum Bilden einer Mischung ferner die Zugabe eines oder mehrerer weiterer Inhaltsstoffe, ausgewählt aus der Gruppe bestehend aus Salz, Stabilisatoren und Gummis, umfasst.

14. Verfahren nach einem der vorstehenden Ansprüche, wobei das Verfahren ein kontinuierlicher Prozess von dem Schritt des Unterziehens der Molkenproteinlösung einer Kavitationsbehandlung bis zur Bildung des Rahmkäses ist.

15. Verfahren nach einem der vorstehenden Ansprüche, wobei der Rahmkäse zu weniger als 33 Gew.-% Gesamtfeststoffe umfasst.

## Revendications

1. Procédé de fabrication d'un fromage à la crème, le procédé comprenant :
(i) la fourniture de caillé de fromage,
(ii) la fourniture d'une solution de protéines de lactosérum comprenant du lactosérum idéal,
(iii) le fait de soumettre la solution de protéines de lactosérum à un traitement par cavitation suffisant pour chauffer la solution de protéines de lactosérum à une température allant de 80 °C à 90 °C pour fournir une solution de protéines de lactosérum traitée thermiquement,
(iv) le mélange du caillé de fromage et de la solution de protéines de lactosérum traitée thermiquement pour former un mélange, et
(v) le fait de soumettre le mélange à un traitement thermique de texturation pour former le fromage à la crème ; dans lequel le traitement thermique de texturation comprend le chauffage du mélange à une température allant de 65 °C à 90 °C avec cisaillement pendant un laps de temps d'au moins 15 minutes ; et
dans lequel le lactosérum idéal est du lactosérum qui contient des protéines de lactosérum non dénaturées.

2. Procédé selon la revendication 1, dans lequel après l'étape (ii) et avant l'étape (iii) :
(a) la solution de protéines de lactosérum est soumise à une ultrafiltration, de préférence dans lequel l'ultrafiltration est suffisante pour concentrer une teneur en protéines de la solution de protéines de lactosérum d'un facteur d'au moins 3 ; et/ou
(b) le pH de la solution de protéines de lactosérum est ajusté pour obtenir un pH allant de 4,5 à 5,1, de préférence de 4,8 à 4,9, par fermentation avec des bactéries lactiques, ou par ajout d'acide citrique.

3. Procédé selon la revendication 1 ou la revendication 2, dans lequel le caillé de fromage est obtenu dans un procédé comprenant :
la fourniture d'un liquide laitier comprenant de la crème, un concentré de lait microfiltré, et du lait ;
la fermentation du liquide laitier pour former le caillé de fromage et un lactosérum acide ; et
la séparation du caillé de fromage du lactosérum acide par ultrafiltration,
de préférence dans lequel le liquide laitier est obtenu par :
la séparation du lait en crème et en lait écrémé,
la microfiltration du lait écrémé pour produire un concentré de lait microfiltré en tant que rétentat et un lactosérum idéal en tant que perméat, et
le mélange de la crème et du concentré de lait microfiltré conjointement avec le lait pour former le liquide laitier.

4. Procédé selon la revendication 3, dans lequel la solution de protéines de lactosérum comprend du lactosérum doux comprenant un lactosérum idéal provenant d'une microfiltration du lait écrémé et, éventuellement, un lactosérum idéal doux provenant d'un processus de fabrication de fromage à pâte dure.

5. Procédé selon l'une quelconque des revendications 3 à 4, dans lequel le procédé comprend en outre la concentration d'au moins une partie du lactosérum idéal par évaporation, osmose inverse ou nanofiltration, pour former un lactosérum idéal concentré.

6. Procédé selon la revendication 3 à 5, dans lequel la solution de protéines de lactosérum comprend du lactosérum acide provenant de la fermentation du liquide laitier, de préférence dans lequel la solution de protéines de lactosérum est formée en mélangeant du lactosérum acide provenant de la fermentation du liquide laitier et du lactosérum doux comprenant du lactosérum idéal provenant de la microfiltration du lait écrémé et, éventuellement, du lactosérum doux provenant d'un processus de fabrication de fromage à pâte dure, et de préférence dans lequel au moins une partie du lactosérum doux comprenant du lactosérum idéal a été préconcentrée pour former un lactosérum doux concentré.

7. Procédé selon l'une quelconque revendication précédente, dans lequel la solution de protéines de lactosérum :
(i) comprend de 15 à 30 % en poids de matières solides ; et/ou
(ii) a un pH allant de 5,7 à 6,1.

8. Procédé selon l'une quelconque revendication précédente, dans lequel le lactosérum idéal comprend de 10 à 100 % en poids de protéines dans la solution de protéines de lactosérum, de préférence de 15 à 85 % en poids et le plus préférablement de 20 à 70 % en poids.

9. Procédé selon l'une quelconque revendication précédente, dans lequel la solution de protéine de lactosérum est formée en mélangeant :
20 à 40 % en poids de lactosérum acide comprenant de 4 à 8 % en poids de matières solides ;
40 à 60 % en poids de lactosérum doux comprenant de 4 à 8 % en poids de matières solides ; et
10 à 30 % en poids de lactosérum doux concentré comprenant de 20 à 40 % en poids de matières solides.

10. Procédé selon l'une quelconque des revendications 1 à 8, dans lequel la solution de protéines de lactosérum est formée en mélangeant :
20 à 40 % en poids de lactosérum acide comprenant de 4 à 8 % en poids de matières solides ;
5 à 15 % en poids de concentré de lactosérum doux de présure comprenant de 20 à 40 % en poids de matières solides ;
30 à 55 % en poids de lactosérum idéal doux comprenant de 4 à 6 % en poids de matières solides ; et
5 à 15 % en poids de concentré de lactosérum idéal doux comprenant 20 à 40 % en poids de matières solides.

11. Procédé selon l'une quelconque revendication précédente, dans lequel la solution de protéines de lactosérum traitée thermiquement est ajoutée au caillé de fromage dans un rapport pondéral de la solution de protéines de lactosérum traitée thermiquement au caillé de fromage allant de 1:19 à 2:3.

12. Procédé selon l'une quelconque revendication précédente, le procédé comprenant en outre le conditionnement du fromage à la crème dans un emballage, de préférence directement à partir du traitement thermique de texturation.

13. Procédé selon l'une quelconque revendication précédente, dans lequel l'étape de mélange du caillé de fromage et de la solution de protéines de lactosérum traitée thermiquement pour former un mélange comprend en outre l'ajout d'un ou plusieurs ingrédients supplémentaires choisis dans le groupe constitué de sel, stabilisants et gommes.

14. Procédé selon l'une quelconque revendication précédente, dans lequel le procédé est un processus continu à partir de l'étape consistant à soumettre la solution de protéines de lactosérum à un traitement par cavitation jusqu'à la formation du fromage à la crème.

15. Procédé selon l'une quelconque revendication précédente, dans lequel le fromage à la crème comprend moins de 33 % en poids de matières solides totales.
